# EUROPÄISCHE PATENTSCHRIFT

(11) **EP 0 981 403 B1**
(45) Veröffentlichungstag und Bekanntmachung des Hinweises auf die Patenterteilung: **05.06.2002**
(21) Anmeldenummer: 98925556.7
(22) Anmeldetag: 08.05.1998
(51) Int. Cl.: B01D 53/94, F01N 3/20

(54) **VERFAHREN UND VORRICHTUNG ZUR REDUKTION VON STICKOXIDEN AN EINEM SCR-KATALYSATOR**
METHOD AND DEVICE FOR REDUCING NITROGEN OXIDES USING A SCR CATALYST
PROCEDE ET DISPOSITIF POUR LA REDUCTION DES OXYDES NITRIQUES AVEC UN CATALYSEUR A REDUCTION SELECTIVE

(30) Priorität: 14.05.1997 DE 19720209
(43) Veröffentlichungstag der Anmeldung: 01.03.2000
(73) Patentinhaber: HJS FAHRZEUGTEILE-FABRIK GmbH & CO., D-58706 Menden (DE); Weisweiler, Werner, 75196 Remchingen (DE)
(72) Erfinder: WEISWEILER, Werner, D-75196 Remchingen (DE)
(74) Vertreter: Haverkamp, Jens
(86) Internationale Anmeldenummer: EP9802697
(87) Internationale Veröffentlichungsnummer: WO9851402

(56) Entgegenhaltungen:
- EP-A- 0 277 765
- EP-A- 0 381 236
- EP-A- 0 615 777
- EP-A- 0 617 199
- DE-A- 4 200 514
- PATENT ABSTRACTS OF JAPAN vol. 015, no. 007 (C-0794), 9.Januar 1991 & JP 02 258017 A (BABCOCK HITACHI KK), 18.Oktober 1990,
- PATENT ABSTRACTS OF JAPAN vol. 096, no. 007, 31.Juli 1996 & JP 08 057258 A (BABCOCK HITACHI KK), 5.März 1996,

## Beschreibung

Die Erfindung bezieht sich auf das Gebiet der Verminderung von bei Verbrennungsmotoren entstehenden Primärschadstoffen mittels eines Katalysators. Insbesondere betrifft die Erfindung ein Verfahren zur Reduktion von Stickoxiden (NOₓ) an einem SCR-Katalysator, der im Abgasstrang eines Verbrennungsmotors angeordnet ist, mit Ammoniak (NH₃) welches vorzugsweise vor dem Katalysator in den Abgasstrom eingebracht wird. Femer betrifft die Erfindung eine Vorrichtung zum Zuführen von Ammoniak (NH₃) in den Abgasstrom eines Verbrennungsmotors zur Reduktion von in dem Abgasstrom enthaltener Stickoxide (NOₓ) an einem SCR-Katalysator, umfassend eine NH₃-Quelle, eine Zuführleitung zum Zuführen des NH₃ in den Abgasstrom und eine Dosiervorrichtung.

Neben Kohlenmonoxid (CO) und Kohlenwasserstoffen (HC) gehören insbesondere die Stickoxide (NOₓ) zu den umweltgefährdenden direkt emittierten Primärschadstoffen, die beim Betrieb von Verbrennungsmotoren, insbesondere Dieselmotoren, entstehen. Ein Einsatz von Dreiwegekatalysatoren, wie sie bei Ottomotoren und Gasmotoren verwendet werden, sind aufgrund eines Sauerstoffüberschusses im dieselmotorischen Abgas nicht einsetzbar. Aus diesem Grunde wurde zur Reduktion der Stickoxidemission bei Dieselmotoren ein selektiv arbeitender SCR-Katalysator (Selektive Catalytic Reduction-Katalysator) entwickelt, in dem mit einem zugeführten Reduktionsmittel, nämlich Ammoniak (NH₃) die ausgestoßenen Stickoxide zu N₂ und H₂O reduziert werden.

Bewährt hat sich diese Art der Reduktion von Stickoxidemissionen bei stationären Dieselmotoren. Bei diesen stationären Anlagen ist in dem Abgasstrang des Verbrennungsmotors ein SCR-Katalysator angeordnet, wobei das dem Abgasstrom beizumengende NH₃ vor dem SCR-Katalysator durch Eindüsen dem Abgasstrom beigemengt wird. Das NH₃ wird bei solchen Anlagen als Gas oder als wässrige Lösung zugeführt. Bei einer Zuführung wässriger NH₃-Lösungen erfolgt eine thermolytische Aufspaltung im Abgasstrom bzw. im SCR-Katalysator, um das zur Reduktion der Stickoxide benötige NH₃ freizusetzen. Die Zuführung des Reduktionsmittels erfolgt über eine Dosiervorrichtung, welche in Abhängigkeit von der erwarteten NOₓ-Menge im Abgasstrom des Dieselaggregats eingestellt wird. Bei einer Verwendung von NH₃ entweder als Gas oder als wässrige Lösung bedarf dieses jedoch den Einsatz von geschultem Personal, da der Umgang mit diesen Stoffen sowohl hinsichtlich ihrer Handhabung als auch hinsichtlich ihrer Toxizität nicht ungefährlich ist.

Aufgrund des nicht ungefährlichen Umganges mit NH₃ als Gas bzw. als wässrige Lösung ist man dazu übergegangen, das zur NOₓ-Reduktion benötigte NH₃ durch Zuführen von wässriger Hamstofflösung in den Abgasstrom bereitzustellen. Die thermohydrolytische Aufspaltung unter Abgabe von NH₃ als Reduktionsmittel erfolgt dann durch die Wärme des Abgasstromes bzw. des Katalysators. Neben den verfahrenstechnischen Schwierigkeiten einer unkontrollierten Einspeisung dieses Reduktionsmittels in Aerosolform ist als weiterer Nachteil bei der NH₃-Gewinnung auf diesem Wege die Bildung von unerwünschten Nebenprodukten wie beispielsweise Isocyansäure zu nennen. Einem Einsatz wässriger Hamstofflösungen zur NOₓ-Reduktion von dieselmotorischen Abgasen bei mobilen Aggregaten, etwa bei Nutzfahrzeugen oder bei Personenkraftfahrzeugen steht zudem entgegen, daß der Gefrierpunkt eines solchen Reduktionsmittels bei etwa -13°C liegt. Ein wintertauglicher Einsatz dieses Reduktionsmittels ist daher nur durch eine Beimengung von gefrierpunktherabsetzenden Zusätzen möglich. Die Umsetzung dieser Zusätze im SCR-Katalysator kann jedoch zu einer Emission von unerwünschten Sekundärschadstoffen führen.

Überdies ist es notwendig, eine relativ große Menge an wässriger Harnstofflösung mitzuführen, da der zur Reduktion notwendige Harnstoff in der wässrigen Lösung nur in einem Verhältnis von bestenfalls 1:3 hinsichtlich des H₂O vorliegt.

Ein Einsatz von mitgeführtem NH₃ in Druckflaschen oder als wässrige Lösung zur Entstickung mobiler Dieselaggregate ist aufgrund der von diesen Stoffen ausgehenden Gefährdung im Falle eines Unfalles nicht möglich.

Aus der JP-A-2 258 017, der DE 34 22 175 A1 sowie der DE 42 00 514 A1 sind Verfahren bekannt, die eine "just-in-time"-Produktion von NH₃ zur NOₓ-Reduktion betreffen. Der sich aus diesen Druckschriften ergebende übergeordnete Gedanke besteht darin, bestimmte, thermolytisch NH₃-abspaltende Stoffe, deren Handhabbarkeit und deren Toxizität unbedenklich sind, zu verwenden, um die jeweils benötigte NH₃-Menge den Anforderungen entsprechend abzuspalten und in den Abgasstrom einzudüsen. Die Erzeugung des NH₃ erfolgt durch Erhitzen einer solchen NH₃-abspaltenden Verbindung, etwa Ammoniumcarbamat. Eine Anpassung an den jeweiligen Motorbetriebszustand erfolgt wie in der DE 34 22 175 A1 beschrieben, dadurch, daß durch Steuern der Heizleistung, mit welcher etwa das Carbamat beaufschlagt wird, die NH₃-Erzeugung und somit die NH₃-Zugabemenge zum Abgasstrom regelbar ist.

Ein solcher regelbarer NH₃-Erzeuger besteht im wesentlichen aus einem Vorratsbehälter für die NH₃-abspaltende Verbindung, einer Zersetzungskammer, in welcher die Einwirkung der Wärme erfolgt, sowie einer Ausführungs- bzw. Zuführleitung för das NH₃-haltige Gas. Zur Beheizung der Zersetzungskammer sind insbesondere elektrische Heizungen, etwa Widerstandsheizkörper oder lnfrarotstrahler vorgesehen.

Zwar ist die Verwendung dieses vorbekannten Verfahrens bzw. dieser vorbekannten Vorrichtung für stationäre Anlagen, welche im allgemeinen nur wenigen Lastwechseln und wenn dann nur vorherbestimmten Lastwechseln unterworfen sind, geeignet. Für einen Einsatz im mobilen Bereich, wie beispielsweise bei Nutzfahrzeugen oder Personenkraftwagen, ist der Einsatz dieser vorbekannten Technologie unzweckmäßig, da die Reaktionszeit des Systems zu langsam und somit das System zu träge ist, um die im Straßenverkehr unerwartet in schneller Folge auftretenden Motorlastwechsel mit entsprechend unterschiedlichen NOₓ-Emissionen gerecht werden zu können. Wird nämlich der Motorbetriebszustand zu einer bestimmten Zeit erfaßt und daraus eine bestimmte NH₃-Dosierung berechnet, muß zunächst der NH₃-abspaltende Stoff zur Produktion des NH₃-Gasgemisches erwärmt werden. Im Straßenverkehr, insbesondere im Stadtverkehr unterliegt ein Motor jedoch ständigen, vor allem unvorhergesehenen Lastwechseln, so daß die schließlich zugeführte NH₃-Menge nicht an einen zwischenzeitlich geänderten Motorbetriebszustand angepaßt ist. Wird zu wenig NH₃ zugeführt, ist auch die damit mögliche NOₓ-Reduktion nur begrenzt durchführbar. Ist das zugeführte NH₃ überdosiert, tritt unverbrauchtes NH₃ aus dem Katalysator aus.

Ausgehend von diesem diskutierten Stand der Technik liegt der Erfindung daher die Aufgabe zugrunde, ein Verfahren sowie eine Vorrichtung zur NOₓ-Reduktion von Abgasen eines Verbrennungsmotors unter Verwendung eines SCR-Katalysators vorzuschlagen, welches bzw. welche nicht nur für den mobilen Bereich geeignet sind, sondern mit denen auch die oben aufgezeigten Nachteile vermieden sind.

Diese Aufgabe wird erfindungsgemäß durch ein gattungsgemäßes Verfahren dadurch gelöst, daß das Verfahren folgende Schritte umfaßt:
- anfängliches Erwärmen eines auf Umgebungstemperatur befindlichen, thermolytisch NH₃-abspaltenden, in einem druckfesten Behältnis (Konverter) befindlichen Stoffes oder Stoffgemisches auf denjenigen Temperaturbereich, in dem die NH₃-Abspaltung erfolgt (Abspaltungstemperaturbereich),
- Aufrechterhalten des Abspaltungstemperaturbereichs zum Aufbau eines Innendruckes in dem Konverter
- Zwischenspeichern des abgespaltenen NH₃ bzw. NH₃-Gasgemisches und nach Erreichen eines vorbestimmten Reduktionsgasdruckes im NH₃-Speicher
- Erfassen von Motorbetriebskenndaten, denen zufolge der NOₓ-Gehalt im Abgasstrom berechenbar ist, aus welchen Kenndaten anschließend die Bestimmung der zur Reduktion des berechneten NOₓ-Gehaltes notwendigen NH₃-Dosierung erfolgt,
- Eindüsen einer vorbestimmten Dosis des gespeicherten NH₃ in den Abgasstrom des Verbrennungsmotors, wobei sich die letzten beiden Verfahrensschritte während des Motorbetriebes beliebig häufig wiederholen.

Ferner wird diese Aufgabe erfindungsgemäß dadurch gelöst, daß als NH₃-Quelle ein beheizbarer druckfester Konverter (2) vorgesehen ist, in welchem sich ein thermolytisch NH₃-abspaltender Stoff oder ein thermolytisch NH₃-abspaltendes Stoffgemisch befindet, und daß der Dosiervorrichtung ein NH₃-Speicher zum Zwischenspeichem von aus dem Stoff (15) durch Wärmezufuhr abgespaltenem NH₃ vorgeschaltet ist, welche Dosiervorrichtung mit Steuersignalen einer Motorbetriebskenndaten verarbeitenden, daraus den NOₓ-Ausstoß bestimmenden Steuereinheit beaufschlagt ist.

Durch Vorsehen eines Verfahrens, welches den Einsatz eines bezüglich seiner Handhabbarkeit und seiner Toxizität unbedenklichen Stoffes oder Stoffgemisches als NH₃-Precursor ermöglicht und welches durch Aufbau eines Innendruckes in dem Konverter das Einstellen eines Gleichgewichtszustandes zum (zeitlichen) Beenden einer weiteren NH₃-Abspaltung ausnutzt, ist ein Verfahren geschaffen, mit welchem nur eine bestimmte NH₃-Menge zur Verfügung gestellt wird. Es steht daher zu jeder Zeit eine bestimmte NH₃-Menge zur Verfügung, die in den Abgasstrom zur NOₓ-Reduktion eindüsbar ist. Die zwischengespeicherte NH₃-Menge ist so gering, daß diese auch bei einer hypothetischen Zerstörung des Konverters im Unfallsfalle durch seine rasche Vermischung mit Umgebungsluft als unbedenklich einzustufen ist.

Durch Erfassen von Motorbetriebskenndaten, insbesondere die Motordrehzahl, der Lastzustand und/oder der Ladedruck eines Turboladers, und gegebenenfalls von Konzentrationen von Abgaskomponenten wird die Berechnung des NOₓ-Massenstroms im Abgas und daraus die Berechnung der NH₃-Menge ermöglicht. Da eine ausreichende NH₃-Menge zwischengespeichert ist, ist ein Verfahren geschaffen, welches eine quasi gleichzeitig mit der NH₃-Bestimmung erfolgende NH₃-Ausgabe ermöglicht. Das erfindungsgemäße Verfahren sowie die erfindungsgemäße Vorrichtung sind daher vor allem zur NOₓ-Reduktion mobiler, unvorhergesehenen Lastwechseln unterworfener Dieselaggregate geeignet.

Die Erfindung vereint die Vorteile des Zuführens von NH₃ als Gas in den Abgasstrom, das Mitführen von bezüglich ihrer Handhabbarkeit und ihrer Toxizität bei Umgebungstemperatur unbedenklicher Stoffe oder Stoffgemische sowie die unmittelbare Bereitstellung von benötigtem NH₃.

Das erfindungsgemäße Verfahren sowie die erfindungsgemäße Vorrichtung sind für einen Einsatz von im wesentlichen rückstandsfrei thermolytisch sich zersetzender, NH₃ abspaltender Stoffe, wie etwa Ammoniumcarbamat (NH₂CO₂NH₄) sowie zum Einsatz von reversibel NH₃sorbierender/desorbierender und damit NH₃-abspaltender Stoffe, etwa von einem Eisen-(II)-ammin-sulfat, geeignet.

Zweckmäßigerweise wird zum anfänglichen Erwärmen sowie zum Aufrechterhalten des Abspaltungstemperaturbereichs des Konverters Wärme, die beim Betrieb des Verbrennungsmotors entsteht, verwendet, wobei es zweckmäßig ist, dem Konverter eine Wärmeschlange zuzuordnen, die insbesondere bei einem Einsatz von Ammoniumcarbamat an den Kühlwasserkreislauf des Verbrennungsmotors angeschlossen ist. Das Kühlwasser befindet sich beim Betrieb des Verbrennungsmotors zwischen 80 und 110°C, was einen Konverterinnendruck von etwa 6,5 - 8 bar bei Erreichen des Gleichgewichtszustandes entspricht. Der Konverter ist daher für einen Betrieb bei derartigen Innendrücken geeignet druckfest ausgebildet, wobei zweckmäßigerweise eine Sicherheitsmarge berücksichtigt ist.

In einem Ausführungsbeispiel ist vorgesehen, daß das Zwischenspeichern des abgespaltenen NH₃ im Konverter selbst erfolgt. In einem weiteren Ausführungsbeispiel ist als Zwischenspeicher ein separater NH₃-Speicher vorgesehen, dessen Speicherdruck unterhalb des Betriebsdruckes des Konverters liegt.

Zum besseren Dosieren der zu entnehmenden NH₃-Menge weist der Konverter zweckmäßigerweise ein Druckreduzierventil auf. Als Dosiervorrichtung ist zweckmäßgerweise ein Taktventil vorgesehen.

In einer Weiterbildung ist vorgesehen, daß die maximale NH₃-Dosierung geringfügig kleiner als die jeweilig als optimal bestimmte NH₃-Dosierung bemessen ist. Gemäß einer solchen Ausgestaltung wird vermieden, daß trotz quasi gleichzeitiger NH₃-Zuführung bei einem abrupten Lastwechsel möglicherweise nicht umgesetztes NH₃ rückseitig aus dem SCR-Katalysator austritt. In begrenztem Maße könnte eine Emission von überschüssigem NH₃ auch durch einen dem SCR-Katalysator nachgeschalteten Oxidationskatalysator vermindert werden.

Der verwendete, den NH₃-abspaltenden Stoff enthaltende Konverter kann mittels Schnellverschlüssen an die zum Erwärmen und Aufrechterhalten der Temperatur vorgesehenen Heizmittel sowie an die NH₃-Zuführieitung anschließbar sein. Auf diese Weise ist ein rascher Austausch des Konverters durchführbar, wenn der darin enthaltene, NH₃-abspaltende Stoff oder das darin enthaltende, NH₃-abspaltende Stoffgemisch verbraucht ist. Femer kann vorgesehen sein, daß der Konverter aus einer Heizeinheit und einem Reaktionsbehälter besteht, wobei der Reaktionsbehälter von der Heizeinheit lösbar ist. Die beispielsweise an den Kühlwasserkreislauf angeschlossene Heizeinheit verbleibt beim Fahrzeug, so daß nur der eigentliche Reaktionsbehälter austauschbar ist

Weitere Vorteile der Erfindung sowie Weiterbildungen sind Bestandteil der übrigen Unteransprüche sowie der nachfolgenden Beschreibung eines bevorzugten Ausführungsbeispieles. Es zeigen:
- **Fig. 1**: in einer schematischen Darstellung eine Vorrichtung zum Zuführen von Ammoniak in den Abgasstrom eines Verbrennungsmotors zur Reduktion von im Abgasstrom enthaltener Stickoxide,
- **Fig. 2**: ein Diagramm darstellend die Zersetzung von Ammoniumcarbamat und Ammoniumhydrogencarbonat im Temperaturbereich von 35 - 130°C,
- **Fig. 3**: ein Diagramm darstellend die Zersetzung von Eisen-(II)-triamminsulfat-Monohydrat im Temperaturbereich von 30 - 450°C und
- **Fig. 4**: ein Diagramm darstellend den zeitlichen Druck- und Temperaturverlauf bei einem Einsatz von Ammoniumcarbamat bei wiederholter Gasentnahme.

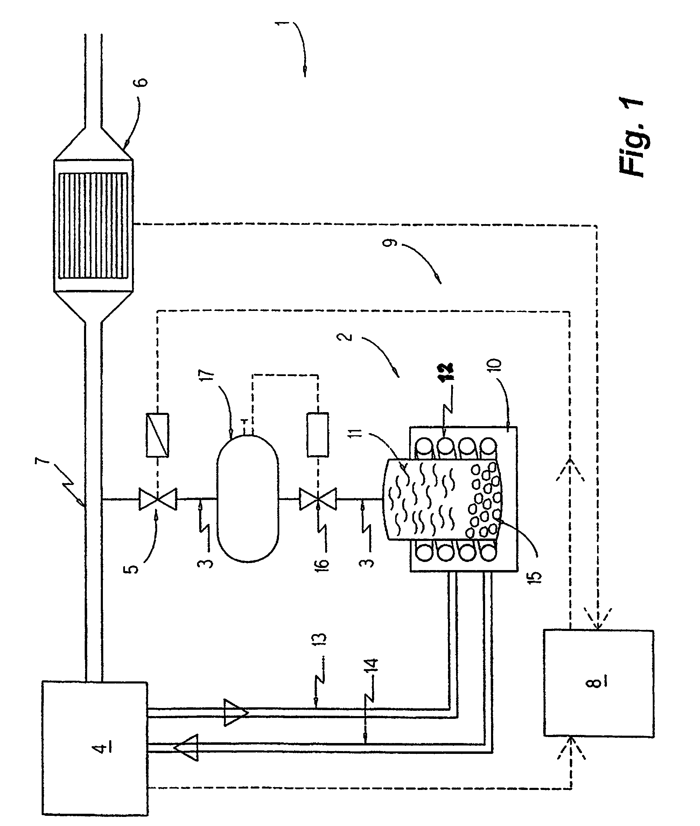

Die in Figur 1 schematisch dargestellte Entstickungsvorrichtung 1 umfaßt einen Konverter 2, eine Zuführleitung 3 zum Zuführen von NH₃ in den Abgasstrom eines Dieselmotors 4 und ein als Dosiervorrichtung vorgesehenes Taktventil 5 sowie einen SCR-Katalysator 6. Die Zuführleitung 3 mündet in den Abgasstrang 7 des Dieselmotors 4 vor der Eingangsseite des Katalysators 6.

Zur Steuerung des Taktventiles 5 ist eine speicherprogrammierte Steuereinheit 8 vorgesehen, die mit den Signalen von Motorbetriebskenndaten aufnehmenden Sensoren sowie mit den Signalen eines die Katalysatortemperatur aufnehmenden Sensors beaufschlagt ist Ausgangsseitig ist die Steuereinheit über eine Steuerleitung 9 mit dem Taktventil 5 verbunden, so daß das Taktventil 5 durch die Steuereinheit 8 gesteuert wird.

Der Konverter 2 besteht aus einer Heizeinheit 10 sowie einem Reaktionsbehälter 11. Die Heizeinheit 10 umfaßt eine Wärmeschlange 12, die über eine Zuleitung 13 und eine Ableitung 14 in den Kühlwasserkreislauf des Dieselmotors 4 eingebunden ist Das die Wärmeschlange 12 durchströmende Kühlwasser hat bei einem Betrieb des Dieselmotors 4 in der Regel eine Temperatur zwischen 80 und 100°C, die gegebenenfalls auch bis 110°C ansteigen kann. Zum raschen Erwärmen der Heizeinheit 10 bzw. des darin aufgenommenen Reaktionsbehälters 11 sind die Zu- und Ableitungen 13, 14 in den sogenannten kleinen Kühlwasserkreislauf des Dieselmotors 4 eingebunden.

Der Reaktionsbehälter 11 ist ein druckfester Behälter, in dem eine vorbestimmte Menge an Ammoniumcarbamat 15 eingebracht ist Der Reaktionsbehälter 11 ist druckfest verschlossen. Der in Figur 1 dargestellte Reaktionsbehälter 11 ist verschließbar, so daß nach einem Verbrauch des Ammoniumcarbamats 15 dieser geöffnet und neu befüllbar ist.

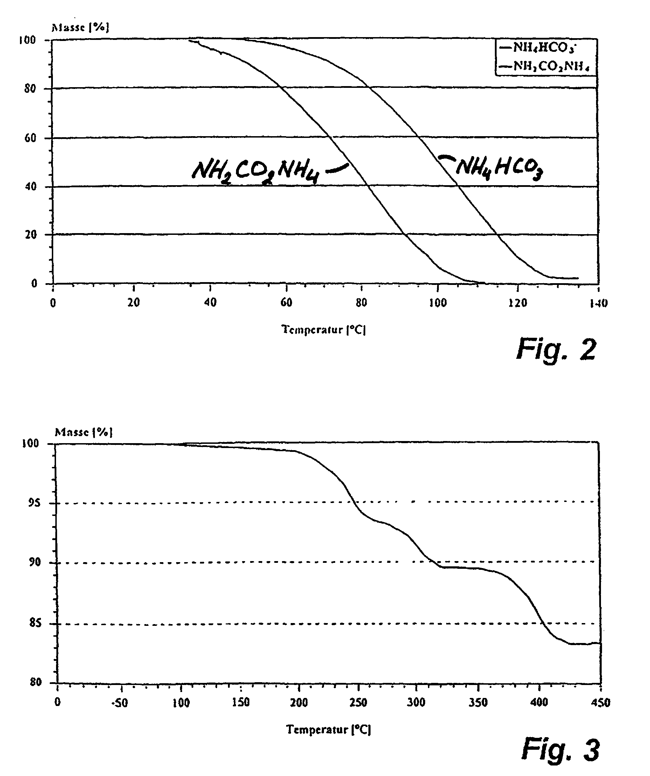

Durch Aufheizen des Ammoniumcarbamats 15 infolge der Durchströmung der Heizeinheit 10 mit in der Regel 80 - 100°C warmen Kühlwasser zersetzt sich das Ammoniumcarbamat 15 in NH₃ und Kohlendioxid (CO₂). Wie aus dem in Figur 2 dargestellten Diagramm erkennbar, beginnt die Abspaltungstemperatur des Ammoniumcarbamats 15 bei etwa 40°C. Ammoniumcarbamat ist demzufolge bei Umgebungstemperaturen ohne weiteres handhabbar, ohne daß besondere Anforderungen an die Handhabbarkeit bzw. an die Toxizität dieses Stoffes notwendig sind. In dem für Kühlwassertemperaturen von Dieselmotoren typischen Temperaturbereich von 80 - 100°C erfolgt somit eine nahezu vollständige Zersetzung des Ammoniumcarbamats 15 zur Herstellung des NH₃-enthaltenen Reduktionsgasgemisches.

Ebenfalls ist in Figur 2 auch die Zersetzung von Ammoniumhydrogencarbonat - ein weiterer, zur Durchführung der Erfindung geeigneter Stoff - dargestellt, wobei erkennbar ist, daß eine Zersetzung dieses Stoffes unter Abspaltung von NH₃ erst bei etwa 50°C beginnt und daß eine vollständige Zersetzung bei etwa 130°C stattgefunden hat. Daraus ergibt sich, daß auch Ammoniumhydrogencarbonat zum Abspalten von NH₃ unter den genannten Bedingungen verwendbar ist. Jedoch würde es sich zur effektiven Nutzung des Ammoniumhydrogencarbonats empfehlen, die Heizeinheit 10 mit ihrer Wärmeschlange 12 mit einem wärmeren Medium zu beaufschlagen, etwa diese in den Ölkreislauf des Dieselmotors 4 einzubinden.

Figur 2 entsprechend ist in Figur 3 in einem Diagramm die Deamminierung von Eisen-(II)-triamminsulfat-Monohydrat dargestellt. Mit dem Einsatz von Eisen-(II)-triamminsulfat-Monohydrat als Beispiel eines Eisenamminsulfats wird ein Stoff verwendet, der reversibel NH₃sorbierend/desorbierend ist. Der Einsatz eines solchen Stoffes kann zweckmäßig sein, da gegenüber den beiden vorgenannten Stoffen bei einem Aufheizen ausschließlich NH₃ abgespalten wird; gasförmige Nebenprodukte, wie beispielsweise CO₂, entstehen bei dieser Abspaltung nicht Bei einer Reduktion der Wärmezufuhr, etwa beim Ausschalten des Dieselmotors, wird das abgespaltene NH₃ wieder gebunden.

Die in dem Reaktionsbehälter 11 erzeugten Reduktionsgase - NH₃ und CO₂ bei dem in Figur 1 gezeigten Ausführungsbeispiel unter Verwendung von Ammoniumcarbamat 15 - verbleiben zunächst in dem Reaktionsbehälter 11.

Bei zunehmender Zersetzung des Ammoniumcarbamats 15 durch Aufrechterhalten der Abspaltungstemperatur im Reaktionsbehälter 11 steigt der Innendruck in diesem bis auf etwa 8 bar bei einer Temperatur von etwa 100°C. In Abhängigkeit von der Innentemperatur des Reduktionsbehälters 11 stellt sich bei Erreichen des genannten Innendruckes ein Gleichgewichtszustand ein, so daß weiteres Ammoniumcarbamat 15 nicht zersetzt wird. Somit bildet der Reaktionsbehälter 11 auch gleichzeitig einen NH₃-Speicher, aus dem NH₃ als Teil des aus NH₃ und CO₂ bestehenden Gasgemisches abgezogen werden kann. Ein Abzug einer bestimmten Reduktionsgasmenge führt gleichzeitig zu einer Reduktion des Innendrukkes in dem Reaktionsbehälter 11, so daß die Zersetzung von weiterem Ammoniumcarbamat 15 unter Abspaltung von NH₃ die Folge ist. Es wird solange weiteres Ammoniumcarbamat 15 zersetzt, bis sich der oben genannte Gleichgewichtszustand wieder eingestellt hat Durch Ausnutzen des sich einstellenden Gleichgewichtszustandes in dem Reaktionsbehälter 11 ist ein Mittel geschaffen, um die NH₃-Produktion nach Erreichen einer bestimmten NH₃-Menge zu stoppen, ohne daß dieses zusätzliche Steuerungsmechanismen bedtirfte.

Das abgespaltene NH₃ wird über ein Druckreduzierventil 16 dem Reaktionsbehälter 11 entnommen und über die Zuführleitung 3 dem Taktventil 5 zugeführt.

In Figur 1 ist eine weitere Variante aufgezeigt, bei welcher zwischen dem Druckreduzierventil 16 und dem Taktventil 5 ein zusätzlicher separater NH₃-Speicher 17 vorgesehen ist. Dieser NH₃-Speicher 17 dient der Zwischenbevorratung von NH₃ und ist für einen Innendruck von etwa 3,5 bar ausgelegt; dieser Innendruck liegt unter dem Betriebsdruck des Konverters 2. Der Ausgang des NH₃-Speichers ist an den Eingang des Taktventils 5 angeschlossen.

In einer nicht dargestellten Weiterbildung ist zusätzlich dem Reaktionsbehälter 11 bzw. dem NH₃-Speicher 17 ein Drucksensor zugeordnet, dessen frontbündige Edelstahl-Membran direkt mit dem In dem jeweiligen Behältnis befindlichen Medium in Kontakt steht. Mit Hilfe eines solchen Drucksensors ist der Innendruck des jeweiligen Behältnisses 11 bzw. 17 erfaßbar; die Meßsignale eines solchen Drucksensors lassen sich zur Feststellung der noch vorhandenen Ammoniumcarbamatmenge verwenden. Baut sich in dem entsprechenden Behältnis 11 bzw. 17 in einem bestimmten Zeitintervall ein vorgegebener Innendruck nicht auf, dann erlaubt dieses einen Rückschluß darauf, daß nur noch unzureichend Ammoniumcarbamat als NH₃-Precurser in dem Reaktionsbehälter 11 zur Verfügung steht. Ein solcher Zustand wird dann,dem Fahrer angezeigt, so daß dieser den Reaktionsbehälter 11 bzw. den Konverter 2 gegen einen neu befüllten austauschen kann.

Die Stickstoffreduktionsvorrichtung 1 funktioniert wie folgt:

Nach einem Starten des Dieselmotors 4 erwärmt sich zunächst dessen kleiner Kühlwasserkreislauf in relativ kurzer Zeit auf 80 - 100°C, gegebenenfalls bis 110°C. Durch den Anschluß der Heizeinheit 10 mit seiner Wärmeschlange 12 an den kleinen Kühlwasserkreislauf beginnt somit auch bereits nach kurzer Zeit eine Zersetzung des in dem Reaktionsbehälter 11 befindlichen Ammoniumcarbamats 15 in ein NH₃ und CO₂ enthaltendes Gasgemisch. Dieser Zersetzungs- bzw. Abspaltungsvorgang dauert an, bis sich der oben angesprochene Gleichgewichtszustand zwischen dem Ammoniumcarbamat 15 und den Zersetzungsgasen - NH₃ und CO₂ - eingestellt hat.

Beim Betrieb des Dieselmotors 4 werden über Sensoren charakteristische Motorbetriebskenndaten, aus denen sich der NOₓ-Ausstoß ermitteln läßt, erfaßt Diese Signale beaufschlagen die Steuereinheit 8. In der Steuereinheit 8 erfolgt die Ermittlung des NOₓ-Ausstoßes des Dieselmotors 4 und eine Bestimmung der entsprechend benötigten NH₃-Menge zur Reduktion des ausgestoßenen NOₓ. Die zur Reduktion des NOₓ bestimmte NH₃-Menge wird verwendet, um das Taktventil 5 entsprechend anzusteuern, damit entweder dem Reaktionsbehälter 11 direkt oder dem NH₃-Speicher 17 die benötigte NH₃-Dosierung entnommen und in den Abgasstrang 7 vor dem SCR-Katalysator 6 eingedüst werden kann. Bereits vor dem SCR-Katalysator 6 vermischt sich das eingedüste NH₃enthaltende Gasgemisch mit dem NOₓ-enthaltenden Abgas, so daß bei Eintritt dieses Abgas-Reduktionsgas-Gemisches in den SCR-Katalysator 6 eine wirksame Reduktion des NOₓ erfolgen kann.

Durch die unmittelbare Umsetzung des jeweilig berechneten NOₓ-Ausstoßes in eine entsprechende Zufuhr von bereits vorhandenem NH₃ ist gewährleistet, daß auch bei rasch und unerwartet auftretenden Lastwechseln die zugeführte NH₃-Dosierung entsprechend bemessen ist.

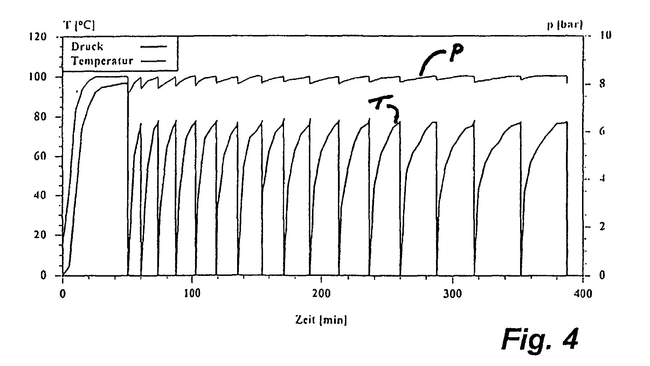

Aus Figur 4 wird der zeitliche Druck- und Temperaturvertauf bei einem Einsatz von Ammoniumcarbamat 15 unter wiederholter Gasentnahme dargestellt. Es ist diesem Diagramm entnehmbar, daß der Druckaufbau im Reaktionsbehälter 11 (hier im Beispiel nur 250 cm³ Inhalt) durch die kontinuierlich abnehmende Ammoniumcarbamatmenge als NH₃-Precurser sich über die Zeit jeweils geringfügig verlängert. Maßgeblich ist für die zeitliche Nutzung eines mit Ammoniumcarbamat 15 befüllten Konverters 2 das Anfangs-Beladungsverhältnis V_{F}/V_{K}, wobei V_{F} das Feststoffvolumen des Ammoniumcarbamats und V_{K} das Konvertervolumen ist. Das Anfangs-Beladungsverhältnis V_{F}/V_{K} beträgt bei dem in Figur 4 dargestellten Diagramm lediglich 0,2.

Mit dem erfindungsgemäßen Verfahren lassen sich die NOₓ-Emissionen von Dieselmotoren im mobilen Einsatz auf unterhalb von 0,4 g/km reduzieren. Wird ein solcher NOₓ-Ausstoß erzielt, welcher unterhalb des sogenannten Euro-III-Grenzwertes liegt, reicht eine Füllung von etwa 1 kg Ammoniumcarbamat in einem drei Liter fassenden Konverter aus, um auf einer Fahrstrecke von 2000 km die NOₓ-Emmission unterhalb des genannten Grenzwertes zu reduzieren. In diesem Beispiel wird auf einen Dieselmotor von 2 Liter Hubraum Bezug genommen. In entsprechend größer dimensionierten Konvertern ließe sich auch eine NOₓ-Minderung für etwa 10.000 Fahrkilometer erzielen, so daß die Emeuerungsintervalle eines Reaktionsbehälters 11 nur relativ selten, etwa im Ölwechselintervall, durchzuführen sind.

### Zusammenstellung der Bezugszeichen

- 1: Entstickungsvorrichtung
- 2: Konverter
- 3: NH₃-Zuleitung
- 4: Dieselmotor
- 5: Taktventil
- 6: SCR-Katalysator
- 7: Abgasstrang
- 8: Steuereinheit
- 9: Steuerleitung
- 10: Heizeinheit
- 11: Reaktionsbehälter
- 12: Wärmeschlange
- 13: Zuleitung Kühlwasser
- 14: Ableitung Kühlwasser
- 15: Ammoniumcarbamat
- 16: Druckreduzierventil
- 17: NH₃-Speicher

## Patentansprüche

1. Verfahren zur Reduktion von Stickoxiden (NOₓ) an einem SCR-Katalysator, der im Abgasstrang eines Verbrennungsmotors angeordnet ist, mit Ammoniak (NH₃), welches vor dem Katalysator in den Abgasstrom eingebracht wird, **dadurch gekennzeichnet, daß** das Verfahren folgende Schritte umfaßt:
- anfängliches Erwärmen eines auf Umgebungstemperatur befindlichen, thermolytisch NH₃-abspaltenden, in einem als druckfestes Behältnis ausgebildeten Konverter (2) befindlichen Stoffes (15) oder Stoffgemisches auf denjenigen Temperaturbereich, in dem die NH₃-Abspaltung erfolgt (Abspaltungstemperaturbereich),
- Aufrechterhalten des Abspaltungstemperaturbereichs zum Aufbau eines Innendruckes in dem Konverter (2) bis zu einem Innendruck, bei dem sich ohne eine Entnahme des gebildeten Gases oder des Gasgemisches ein Gleichgewichtszustand zwischen der temperaturbedingten NH₃-Abspaltung und dem abgespaltenen NH₃ bzw. dem NH₃-Gasgemisch einstelit,
- wodurch eine bestimmte Menge des abgespaltenen NH₃ bzw. des NH₃-Gasgemisches zwischengespeichert wird,
- Erfassen von Motorbetriebskenndaten, denen zufolge der NOₓ-Gehalt im Abgasstrom berechenbar ist, aus welchen Kenndaten anschließend die Bestimmung der zur Reduktion des berechneten NOₓ-Gehaltes notwendigen NH₃-Dosierung erfolgt,
- Eindüsen einer vorbestimmten Dosis des zwischengespeicherten NH₃ in den Abgasstrom des Verbrennungsmotors (4), wobei sich die letzten beiden Verfahrensschritte während des Motorbetriebes beliebig häufig wiederholen.

2. Verfahren nach Anspruch 1, **dadurch gekennzeichnet, daß** zum Erwärmen des Konverters (2) sowie zum Aufrechterhalten der Abspaltungstemperatur Wärme, die beim Betrieb des Verbrennungsmotors (4) entsteht, verwendet wird.

3. Verfahren nach Anspruch 2, **dadurch gekennzeichnet, daß** zum Erwärmen des Konverters (2) sowie zum Aufrechterhalten der Abspaltungstemperatur das Kühlwasser des Verbrennungsmotors (4) verwendet wird.

4. Verfahren nach einem der Ansprüche 1 bis 3, **dadurch gekennzeichnet, daß** das abgespaltene NH₃ in dem Konverter (2) gespeichert wird.

5. Verfahren nach einem der Ansprüche 1 bis 3, **dadurch gekennzeichnet, daß** abgespaltenes NH₃ in einem dem Konverter (2) nachgeschalteten und mit diesem gasverbundenen NH₃-Speicher (17) gespeichert wird, welcher NH₃-Speicher (17) auf einem im wesentlichen gleichbleibenden Druck gehalten wird, der unterhalb des im Konverter (2) vorgesehenen maximalen Betriebsdruckes liegt.

6. Verfahren nach einem der Ansprüche 1 bis 4 oder 5, **dadurch gekennzeichnet, daß** zur Bestimmung des NH₃-Vorrates in dem Konverter (2) die Signale eines im Konverter (2) oder im NH₃-Speicher (17) angeordneten Drucksensors verwendet werden.

7. Verfahren nach einem oder mehreren der Ansprüche 1 bis 6, **dadurch gekennzeichnet, daß** die maximale NH₃-Dosierung geringfügig kleiner als die jeweilig als optimal bestimmte stöchiometrische NH₃-Dosierung bemessen ist.

8. Verfahren nach einem oder mehreren der Ansprüche 1 bis 7, **dadurch gekennzeichnet, daß** als Motorbetriebskenndaten die Motordrehzahl und/oder der Lastzustand und/oder der Ladedruck eines Turboladers erfaßt werden.

9. Verfahren nach einem oder mehreren der Ansprüche 1 bis 8, **dadurch gekennzeichnet, daß** als NH₃-abspaltender Stoff ein rückstandsfrei thermolytisch sich zersetzender Stoff (15) verwendet wird.

10. Verfahren nach Anspruch 9, **dadurch gekennzeichnet, daß** als Stoff Ammoniumcarbamat (NH₂CO₂NH₄) (15) verwendet wird.

11. Verfahren nach einem oder mehreren der Ansprüche 1 bis 8, **dadurch gekennzeichnet, daß** als NH₃-abspaltender Stoff ein reversibel NH₃-sorbierender/desorbierender Stoff, insbesondere ein Eisen-(II)-ammin-sulfat verwendet wird.

12. Vorrichtung zum Zuführen von Ammoniak (NH₃) in den Abgasstrom eines Verbrennungsmotors zur Reduktion von in dem Abgasstrom enthaltener Stickoxide (NOₓ) an einem SCR-Katalysator (6), umfassend einen druckfesten, beheizbaren Konverter (2), in dem sich ein thermolytisch NH₃-abspaltender Stoff (15) oder ein thermolytisch NH₃-abspaltendes Stoffgemisch befindet, eine Zuführleitung (3) zum Zuführen des NH₃ in den Abgasstrom und eine Dosiervorrichtung (5), **dadurch gekennzeichnet, daß** in der Zuführleitung (5) ein öffnenbares Verschlußmittel eingeschaltet ist, damit in der Geschlossen-Stellung des Verschlußmittels bei einem Beheizen des Konverters (2) durch den ablaufenden Zerselzungsprozeß des NH₃-abspaltenden Stoffes (15) oder Stoffgemisches der Innendruck in dem Konverter (2) ansteigt und auf diese Weise der Konverter (2) als NH₃-Speicher zum Bevorraten von in den Abgasstrom einzudüsenden NH₃ oder NH₃-Gasgemisch dient, und daß die Dosiervorrichtung (5) zum Dosieren der NH₃ bzw. NH₃-Gasgemischzugabe mit Steuersignalen einer Motorbetriebskenndaten verarbeitenden, daraus den NOₓ-Ausstoß bestimmenden Steuereinheit (8) beaufschlagt ist.

13. Vorrichtung nach Anspruch 12, **dadurch gekennzeichnet, daß** der Konverter (2) den NH₃-Speicher bildet.

14. Vorrichtung nach Anspruch 12, **dadurch gekennzeichnet, daß** dem Konverter (2) ein separater NH₃-Speicher (17) nachgeschaltet ist, dessen Speicherdruck unterhalb des Betriebsdruckes des Konverters liegt.

15. Vorrichtung nach einem der Ansprüche 12 bis 14, **dadurch gekennzeichnet, daß** der Konverter (2) einen Reaktionsbehälter (11) und eine die beim Betrieb des Verbrennungsmotors (4) entstehende Wärme nutzende Heizeinheit (10) zum Aufheizen des Reaktionsbehälters (11) auf den Abspattungstemperaturbereich und zum Aufrechterhalten dieses Temperaturbereichs umfaßt.

16. Vorrichtung nach Anspruch 15, **dadurch gekennzeichnet, daß** die Heizeinheit (10) eine an den Kühlwasserkreislauf des Verbrennungsmotors (4) angeschlossene Wärmeschlange (12) umfaßt.

17. Vorrichtung nach Anspruch 15 oder 16, **dadurch gekennzeichnet, daß** der Reaktionsbehälter (11) von der Heizeinheit (10) lösbar ist.

18. Vorrichtung nach einem der Ansprüche 12 bis 17, **dadurch gekennzeichnet, daß** dem NH₃-Speicher (11, 17) ein Drucksensor zum Erfassen des in dem NH₃-Speicher (11, 17) befindlichen Drukkes zugeordnet ist.

19. Vorrichtung nach einem oder mehreren der Ansprüche 12 bis 18, **dadurch gekennzeichnet, daß** der Konverter (2) zur druckreduzierten Entnahme von NH₃ ausgangsseitig über ein Druckreduzierventil (16) verfügt.

20. Vorrichtung nach einem oder mehreren der Ansprüche 12 bis 19, **dadurch gekennzeichnet, daß** als Dosiervorrichtung ein von der Steuereinheit (8) gesteuertes Taktventil (5) vorgesehen ist.

## Claims

1. Method of reducing nitric oxides (NOₓ) on a SCR catalyst, which is disposed in the stream of exhaust gas of an internal combustion engine, by using ammonia (NH₃), which is introduced into the stream of exhaust gas upstream of the catalyst, **characterised in that** the method includes the following steps:
- initially heating a thermolytically NH₃-releasing substance (15) or substance mixture, which is at ambient temperature and situated in a converter (2), which is in the form of a pressure-resistant container, to that temperature range in which NH₃ is released (release temperature range),
- maintaining the release temperature range to augment an internal pressure in the converter (2) up to an internal pressure at which a state of equilibrium is set between the temperature-stipulated NH₃ release and the released NH₃ or the NH₃ gas mixture, without the formed gas or the gas mixture being removed,
- whereby a specific quantity of the released NH₃ or the NH₃ gas mixture is stored intermediately,
- detecting engine operational characteristic data, as a consequence of which the NOₓ content in the stream of exhaust gas can be calculated, from which characteristic data the determination of the NH₃ metering, necessary to reduce the calculated NOₓ content, is subsequently effected,
- spraying a predetermined dose of the intermediately stored NH₃ into the stream of exhaust gas of the internal combustion engine (4), the last two method steps being repeated as often as desirable during the operation of the engine.

2. Method according to claim 1, **characterised in that** heat, which is produced during the operation of the internal combustion engine (4), is used to heat the converter (2) and to maintain the release temperature.

3. Method according to claim 2, **characterised in that** the cooling water of the internal combustion engine (4) is used to heat the converter (2) and to maintain the release temperature.

4. Method according to one of claims 1 to 3, **characterised in that** the released NH₃ is stored in the converter (2).

5. Method according to one of claims 1 to 3, **characterised in that** released NH₃ is stored in a NH₃ storage unit (17), which is subsequent to the converter (2) and is gas-connected thereto, which NH₃ storage unit (17) is kept at a substantially constant pressure lying below the maximum operational pressure provided in the converter (2).

6. Method according to one of claims 1 to 4 or 5, **characterised in that** the signals of a pressure sensor, disposed in the converter (2) or in the NH₃ storage unit (17), are used to determine the NH₃ stock available of NH₃ in the converter (2).

7. Method according to one or more of claims 1 to 6, **characterised in that** the maximum NH₃ metering is slightly less than the stoichiometric NH₃ metering which is determined to be optimum in each particular case.

8. Method according to one or more of claims 1 to 7, **characterised in that** the engine speed and/or the load state and/or the load pressure of a turbocharger are/is detected as the engine operational characteristic data.

9. Method according to one or more of claims 1 to 8, **characterised in that** a substance (15), which decomposes thermolytically without leaving any residues, is used as the NH₃-releasing substance.

10. Method according to claim 9, **characterised in that** ammonium carbamate (NH₂CO₂NH₄) is used as the substance. (15).

11. Method according to one or more of claims 1 to 8, **characterised in that** a reversibly NH₃-absorbing/desorbing substance, more especially an iron- (II)-ammine sulphate, is used as the NH₃-releasing substance.

12. Apparatus for supplying ammonia (NH₃) into the stream of exhaust gas of an internal combustion engine to reduce nitric oxides (NOₓ), contained in the stream of exhaust gas, on an SCR catalyst (6), including a pressure-resistant, heatable converter (2), in which there is a thermolytically NH₃-releasing substance (15) or a thermolytically NH₃-releasing substance mixture, a supply line (3) for supplying the NH₃ into the stream of exhaust gas, and a metering apparatus (5), **characterised in that** an openable closure means is incorporated in the supply line so that the internal pressure in the converter (2) rises when the closure means is in the closed position during a heating of the converter (2) because of the occurring decomposition process of the NH₃-releasing substance (15) or substance mixture, and in this manner the converter (2) serves as the NH₃ storage unit for the stocking-up of reserves of NH₃ or NH₃ gas mixture, which is to be sprayed into the stream of exhaust gas, and **in that** the metering apparatus (5) for metering the addition of NH₃ or NH₃ gas mixture is impinged upon with control signals of a control unit (8), which processes engine operational characteristic data and determines therefrom the NOₓ output.

13. Apparatus according to claim 12, **characterised in that** the converter (2) forms the NH₃ storage unit.

14. Apparatus according to claim 12, **characterised in that** a separate NH₃ storage unit (17) is subsequent to the converter (2), the storage pressure of which unit lies below the operational pressure of the converter.

15. Apparatus according to one of claims 12 to 14, **characterised in that** the converter (2) includes a reaction vessel (11) and a heating unit (10), which utilises the heat produced during the operation of the internal combustion engine (4), for heating the reaction vessel (11) to the release temperature range and for maintaining this temperature range.

16. Apparatus according to claim 15, **characterised in that** the heating unit (10) includes a heating coil (12), which communicates with the cooling water circuit of the internal combustion engine (4).

17. Apparatus according to claim 15 or 16, **characterised in that** the reaction vessel (11) is detachable from the heating unit (10).

18. Apparatus according to one of claims 12 to 17, **characterised in that** the NH₃ storage unit (11, 17) has associated therewith a pressure sensor for detecting the pressure situated in the NH₃ storage unit (11, 17).

19. Apparatus according to one or more of claims 12 to 18, **characterised in that** the converter (2) for the pressure-reduced removal of NH₃, has a pressure reducing valve (16) at the outlet end.

20. Apparatus according to one or more of claims 12 to 19, **characterised in that** a timing valve (5), controlled by the control unit (8), is provided as the metering apparatus.

## Revendications

1. Procédé de réduction d'oxydes nitriques (NOₓ) dans un catalyseur à réduction sélective intégré dans le circuit d'échappement d'un moteur à combustion, avec de l'ammoniac (NH₃) injecté avant le catalyseur dans flux des gaz d'échappement, **caractérisé en ce que** le procédé comprenne les étapes suivantes :
- Chauffage initial dans un convertisseur (2) conçu en tant que récipient résistant à la pression, d'un produit (15) ou produit composé dans lequel se trouve, à température ambiante, du NH₃ se dégageant par réaction thermolytique, jusqu'à atteindre la plage de températures dans laquelle s'effectuera la séparation du NH₃ (plage de températures de décomposition)
- Maintien de cette plage de températures de décomposition afin d'accumuler une pression intérieure dans le convertisseur (2) pour que s'instaure, sans prélèvement de gaz ou de mélange de gaz formé, un état d'équilibre entre le dégagement de NH₃ par action de la chaleur et le NH₃ ou mélange gazeux contenant du NH₃ qui s'est déjà dégagé,
- ce qui a pour conséquence de stocker de façon intermédiaire une certaine quantité de NH₃ ou un mélange gazeux de NH₃ obtenu par dissociation,
- Enregistrement des caractéristiques de fonctionnement du moteur à partir desquelles il sera possible de calculer le taux de NOₓ dans le flux de gaz d'échappement afin de doser le NH₃ nécessaire pour réduire le taux de NOₓ calculé.
- Injection dans le flux des gaz d'échappement du moteur à combustion (4) d'une dose prédéterminée de NH₃ stocké, sachant que les deux dernières étapes du procédé se répètent à volonté pendant que le moteur fonctionne.

2. Procédé selon la revendication 1, **caractérisé en ce que** le chauffage du convertisseur (2) ainsi que le maintien de la température de décomposition utilisent la chaleur qui se dégage lors du fonctionnement du moteur à combustion (4).

3. Procédé selon la revendication 2, **caractérisé en ce que** le chauffage du convertisseur (2) ainsi que le maintien de la température de décomposition soient assurés par l'eau de refroidissement du moteur à combustion (4).

4. Procédé selon l'une des revendications 1 à 3, **caractérisé en ce que** le NH₃ produit soit stocké dans le convertisseur (2).

5. Procédé selon l'une des revendications 1 à 3, **caractérisé en ce que** le NH₃ dégagé soit stocké dans un réservoir (17) de NH₃ situé après le convertisseur (2) et raccordé à celui-ci ; ce réservoir (17) de NH₃ étant maintenu à une pression quasiment constante inférieure à la pression de service maximale prévue dans le convertisseur (2).

6. Procédé selon l'une des revendications 1 à 4 ou 5, **caractérisé en ce que** la réserve de NH₃ dans le convertisseur (2) soit déterminée par les signaux transmis par un détecteur de pression intégré dans le convertisseur (2) ou dans le réservoir (17) de NH₃.

7. Procédé selon une ou plusieurs des revendications 1 à 6, **caractérisé en ce que** le dosage maximal de NH₃ soit légèrement inférieur au dosage optimal stoechiométrique déterminé de NH₃.

8. Procédé selon une ou plusieurs des revendications 1 à 7, **caractérisé en ce que** les caractéristiques de fonctionnement du moteur enregistrées soient le régime et/ou la charge et/ou la pression de chargement d'un turbocompresseur.

9. Procédé selon une ou plusieurs des revendications 1 à 8, **caractérisé en ce que** l'on utilise en guise de produit dégageant du NH₃ un produit (15) se décomposant par thermolyse sans laisser de résidus.

10. Procédé selon la revendication 9, **caractérisé en ce que** l'on utilise en guise de produit (15) du carbonate d'ammonium (NH₂CO₂NH₄).

11. Procédé selon une ou plusieurs des revendications 1 à 8, **caractérisé en ce que** l'on utilise en guise de produit dégageant du NH₃, un produit avec adsorption/désorption réversible de NH₃, notamment un sulfate d'amine ferrique.

12. Dispositif d'amenée d'ammoniac (NH₃) dans le flux des gaz d'échappement d'un moteur à combustion pour la réduction par catalyseur à réduction sélective (6) des oxydes nitriques (NOₓ) contenus dans le flux des gaz d'échappement, comprenant un convertisseur (2) chauffant et résistant à la pression dans lequel se trouve un produit (15) ou mélange de produit dégageant du NH₃ par thermolyse, une conduite d'amenée (3) destinée à acheminer le NH₃ vers le flux des gaz d'échappement et un dispositif doseur (5), **caractérisé en ce qu'**il soit prévu dans la conduite d'amenée (5) un moyen d'obturation ouvrable de sorte qu'en position fermée, lorsque le convertisseur (2) est chauffé, le processus de décomposition du produit (15) ou mélange de produit dégageant du NH₃ qui s'engage provoque une hausse de pression à l'intérieur du convertisseur (2) et que le convertisseur (2) fasse ainsi office de réservoir de NH₃ pour stocker le NH₃ ou le mélange gazeux contenant du NH₃ à injecter dans le flux des gaz d'échappement, et que le dispositif doseur (5) destiné à doser l'injection de NH₃ ou du mélange gazeux contenant le NH₃ soit piloté par des signaux de commande émis par une unité de commande (8) enregistrant les caractéristiques de fonctionnement du moteur et déterminant à partir de celles-ci les émissions de NOₓ.

13. Dispositif selon la revendication 12, **caractérisé en ce que** le convertisseur (2) fasse office de réservoir de NH₃.

14. Dispositif selon la revendication 12, **caractérisé en ce que** le convertisseur (2) soit suivi d'un réservoir (17) séparé de NH₃ dont la pression d'accumulation soit inférieure à la pression de service du convertisseur.

15. Dispositif selon l'une des revendications 12 à 14, **caractérisé en ce que** le convertisseur (2) comprenne un récipient de réaction (11) et une unité de chauffe (10) utilisant la chaleur dégagée lors du fonctionnement du moteur à combustion (4) pour chauffer le récipient de réaction (11) jusqu'à la plage de températures de réaction et pour maintenir cette plage de températures.

16. Dispositif selon la revendication 15, **caractérisé en ce que** l'unité de chauffe (10) comprenne un serpentin chauffant (12) raccordé au circuit d'eau de refroidissement du moteur à combustion (4).

17. Dispositif selon la revendication 15 ou 16, **caractérisé en ce que** le récipient de réaction (11) puisse être désolidarisé de l'unité de chauffe (10).

18. Dispositif selon l'une des revendications 12 à 17, **caractérisé en ce qu'**un détecteur de pression soit intégré au réservoir de NH₃ (11, 17) afin de déterminer la pression à l'intérieur du réservoir de NH₃ (11,17).

19. Dispositif selon une ou plusieurs des revendications 12 à 18, **caractérisé en ce que** le convertisseur (2) dispose du côté sortie d'un clapet réducteur de pression (16) afin de prélever du NH₃ à une pression réduite.

20. Dispositif selon une ou plusieurs des revendications 12 à 19, **caractérisé en ce que** l'on prévoie en guise de dispositif doseur un clapet synchronisé (5) commandé par l'unité de commande (8).
